# EUROPÄISCHE PATENTSCHRIFT

(11) **EP 1 780 871 B1**
(45) Veröffentlichungstag und Bekanntmachung des Hinweises auf die Patenterteilung: **02.02.2011**
(21) Anmeldenummer: 06019283.8
(22) Anmeldetag: 14.09.2006
(51) Int. Cl.: H02K 3/04

(54) **Elektromotor mit mehrlagigen rautenartigen Einzelspulen aus Draht**
Eletric motor with diamond-shaped stratified wire coil
Moteur électrique avec bobine à fil multicouche en forme de diamant

(30) Priorität: 25.10.2005 DE 102005051059
(43) Veröffentlichungstag der Anmeldung: 02.05.2007
(73) Patentinhaber: Maxon Motor AG, 6072 Sachseln (CH)
(72) Erfinder: Gaul, Martin, 6074 Giswil OW (CH); Mitterbäck, Peter, 6052 Hergiswil NW (CH); Mayer, Jürgen, 6072 Sachseln OW (CH); von Moos-Wöhrl, Albin, 6072 Sachseln OW (CH); Rohrer, Richard, 6072 Giswil OW (CH); Schulze, Jens, 6062 Wilen (Samen) OW (CH); Hofer, Rémy, 6055 Luzern LU (CH)
(74) Vertreter: Grünecker, Kinkeldey, Stockmair & Schwanhäusser Anwaltssozietät

(56) Entgegenhaltungen:
- EP-A- 0 056 606
- DE-C1- 4 428 040
- US-A- 4 292 558
- US-A- 5 270 602
- US-A- 5 313 131
- US-A- 5 744 896
- US-B1- 6 355 993
- US-B1- 6 856 063

## Beschreibung

Die Erfindung bezieht sich auf einen Elektromotor mit einer eisenlosen Wicklung, die aus einer Vielzahl von Einzelspulen aus Draht zusammengesetzt ist, wobei die Einzelspulen einander dachziegelartig überlappen, wobei die Einzelspulen so vorgeformt sind, dass sie jeweils mindestens im Bereich zwei gegenüberliegender Ecken einen Versatz bilden, so dass jeweils die Hälfte der Schenkel in einer ersten Ebene und die Hälfte der Schenkel in einer zweiten Ebene liegen.

Die Erfindung bezieht sich insbesondere auf eine eisenlose Wicklung, die sowohl in Rotoren von DC-Motoren als auch in Statoren für EC-Motoren eingesetzt werden kann.

Wie die meisten Elektromotoren, so können auch die hier beschriebenen Motoren grundsätzlich als rotierende Motoren oder als Linearmotoren gebaut werden. In diesem Fall werden die Einzelwicklungen flach oder gekrümmt sich dachziegelartig überlappend aneinandergereiht; statt sich zu einem symmetrischen Hohlzylinder zu schließen haben sie in Bewegungsrichtung vorne und hinten Enden. Ein Linearmotor mit gerader Bewegungsrichtung ergibt sich grundsätzlich durch eine Zylinderprojektion eines rotativen Motors. Die radiale Koordinate bildet sich auf die kartesische Koordinate senkrecht zur Bewegungsrichtung ab, die tangentiale Koordinate oder Winkelkoordinate bildet sich auf die kartesische Koordinate in Bewegungsrichtung ab und die axiale Koordinate auf die kartesische Koordinate senkrecht zu den beiden vorher definierten. Die Begriffe der Zylinderkoordinaten werden im Folgenden in diesem Sinn gleichzeitig die Bezeichnung der in dieser Projektion entsprechenden kartesischen Koordinaten verwendet.

Die Einzelspulen werden nach dem Stand der Technik gewöhnlich aus Draht gefertigt, der zusätzlich zur Isolation eine Auflage hat, die ein Verkleben oder Verbacken erlaubt. Dadurch kann der Herstellprozess auch in mehreren Teilschritten geschehen, ohne den Zusammenhalt der Einzelspulen dazwischen mechanisch gewährleisten zu müssen.

Aus dem Stand der Technik, etwa der DE 1538843 A1, sind Zylinderwicklungen für elektrische Maschinen bekannt. Dabei werden die Spulen aus einem Draht gefertigt und in eine rautenartige Form gezogen.

Ein Verfahren zum Herstellen von derartigen Zylinderwicklungen für elektrische Maschinen ist aus der DE 1801263 A1 bekannt.

Derartige Wicklungen werden sowohl im Rotor kleiner permanenterregter Gleichstrom-Motoren wie auch im Stator elektronisch kommutierter Elektromotoren verwendet.

Die mechanisch kommutierten Gleichstrom-Motoren mit derartigen Wicklungen nennt man auch Motoren mit eisen losem Läufer oder Glockenankermotoren; die entsprechenden elektronisch kommutierten Motoren nennt man Motoren mit eisenloser Wicklung oder nutlose Motoren.

Diese Motoren werden wegen ihres hohen Wirkungsgrades, ihrer Rastmomentfreiheit und der linearen Regeleigenschaften geschätzt und vielerorts eingesetzt.

Aus dem Stand der Technik sind auch Linearmotoren mit entsprechendem Aufbau bekannt. Aus dem Stand der Technik sind auch Elektromotoren mit Wicklungen bekannt, die aus Einzelspulenzylindern aufgebaut sind.

Stand der Technik ist auch aus der US 6,355,993 B1, der DE 44 28 040 C1, der US 5,270,602 A, der US 4,292,558 A, der US 5,313,131 A, US 5,744,896 A, der EP 0 056 606 A1 und der US 6,856,063 B1 bekannt.

Als nächstliegender Stand der Technik wird die US 6,355993 B1 angesehen.

Es ist Aufgabe der vorliegenden Erfindung, Elektromotoren mit einer verbesserten elektrischen und mechanischen Symmetrie und einer höheren Leistung zur Verfügung zu stellen. Es ist auch Aufgabe der vorliegenden Erfindung, einen höheren Automatisierungsgrad bei der Herstellung solcher Elektromotoren zu ermöglichen.

Eine gattungsgemäße Lösung der Aufgabe liegt dann vor, wenn die Einzelspule zur Ermöglichung des Versatzes zusätzliches Drahtmaterial als Vorlauf aufweist. Dies ist besonders vorteilhaft, da bei der Herstellung des Versatzes zusätzliches Drahtmaterial benötigt wird, und durch zusätzliches Drahtmaterial in diesem Bereich eine Überdehnung des Drahtes verhindert wird.

In einer besonderen Ausführungsform ist dies so zu verstehen, dass ein jeder Schenkel der Einzelspule in einer radial anderen Ebene als der jeweils andere Schenkel auf gleicher axialer Höhe liegt, damit die Einzelspulen dachziegelartig aufeinander gesetzt werden können. Solche Ebenen sind wahlweise gekrümmt und haben eine zylindrische Form. Dieser Wechsel der Ebene wird als Versatz bezeichnet.

Für die Ausführung der dachziegelartigen Anordnung wird der Versatz mindestens im Bereich zweier einander gegenüberliegender Ecken der Einzelspule im Bereich der axialen Enden der Wicklung benötigt. Dieser Bereich der axialen Enden der Wicklung wird als neutrale Zone bezeichnet.

Durch die dachziegelartige Anordnung wird eine optimale Ausnutzung des Wicklungsraumes erreicht. Dadurch ergibt sich der Vorteil einer optimierten Leistungsdichte. Ein weiterer Vorteil, der sich durch die erfindungsgemäße Lösung einstellt, besteht darin, dass sich die Einzelspulen gegenseitig positionieren und dadurch eine erhöhte Symmetrie erreichbar ist.

Vorteilhafte Ausgestaltungen des Elektromotors werden in den Unteransprüchen weiter erläutert.

Bei Gleichstrommotoren wie auch bei elektrisch kommutierten Motoren ergibt sich eine verbesserte elektrische Symmetrie und damit ein ruhigerer und verlustärmerer Lauf des Motors, wenn die Einzelspulen einer Wicklung dachziegelartig sich überlappen, um die Rotationsachse des Motors gebogen sind und zusammen die Form eines Hohlzylinders bilden. Bei Gleichstrommotoren bewirkt dies als weiteren Vorteil ein unwuchtarmes gleichmäßiges Rotieren des Rotors. Zudem eröffnet die Formgebung eine einfache Möglichkeit, die Herstellung der Wicklung zu automatisieren.

In einer bevorzugten Ausführungsform ist die Einzelspule spiralig in der abgerollten Form um eine Achse angeordnet, die in der aufgerollten Wicklung in radialer Richtung verläuft, so dass die Drähte in der neutralen Zone im Wesentlichen tangential verlaufen. Diese Ausführungsform wird im Folgenden als konzentrische Ausführungsform bezeichnet. Da sich die Einzelspulen in der fertigen Wicklung in diesem Bereich nicht überlappen, kann der Versatz in diesem Bereich in einer beliebigen Kurvenform ausgebildet werden.

Diese Ausführungsform ermöglicht in besonders vorteilhafter Weise, mehrere Drähte so parallel zu wickeln, dass sie in der abgewickelten Spule parallel zur Wickelachse und in der aufgewickelten Form senkrecht zur Rotationsachse beziehungsweise zur Bewegungsebene nebeneinander liegen. Die parallel gewickelten Drähte werden in der fertigen Wicklung elektrisch parallel geschaltet.

Eine weitere vorteilhafte Ausführungsform besteht darin, eine Vielzahl von isolierten Einzeldrähten vor dem Wickelvorgang zu einer Litze zu verdrillen, wobei die Einzeldrähte der Litze in der fertigen Wicklung elektrisch parallel geschaltet sind. Selbstverständlich kann auch nur ein Draht pro Spule verwendet werden.

Der Vorlauf lässt sich besonders vorteilhaft in einer Ausführungsform realisieren, wenn der Vorlauf als haarnadelartige oder schlaufenförmige Ausbuchtung der Innenkontur der Spule ausgeformt ist und sowohl die Innenseite als auch die Außenseite der Einzelspule eine vordefinierte Form aufweisen, da so ein sauberer Formschluss über die gesamte Diagonale erzielt wird und sowohl der Vorteil einer optimalen Raumausnutzung als auch der Selbstpositionierung erreicht wird.

Eine weitere vorteilhafte Ausgestaltungsform der Einzelspule ist asymmetrisch in dem Sinne, dass zumindest die Einzelspule im abgewickelten flachen Zustand im Wesentlichen die Form eines Vierecks mit ungleichlangen Schenkeln und/oder eines Drachenvierecks aufweist. Durch eine drachenförmige Ausgestaltung der Einzelspule im abgewickelten flachen Zustand lässt sich die Wicklung derart zusammensetzen, dass alle Einzelspulen bündig aneinander liegen. Während bei einer symmetrischen Ausgestaltung der Einzelspulen die radial außen liegenden Schenkel Lücken aufweisen, wenn die inneren Schenkel dicht liegen, kann die Asymmetrie der Schenkel so gestaltet werden, dass sowohl die äußeren Schenkel als auch die inneren Schenkel in der aufgerollten Wicklung dicht beieinander liegen, so dass in beiden Lagen ein sauberer Formschluss über die gesamte Diagonale erzielt wird und sowohl der Vorteil einer optimalen Raumausnutzung als auch der Selbstpositionierung in vorteilhafter Weise verbessert wird. Für sehr dünnwandige Zylinder unterscheiden sich die Radien der inneren und der äußeren Lage kaum und die ideale Form nähert sich einer symmetrischen. Für nicht gekrümmte Linearmotoren ist die ideale Form symmetrisch.

In einer weiteren bevorzugten Ausführungsform weisen die Einzelspulen Einzelwicklungen zwischen idealerweise aneinanderliegenden diagonalen Abschnitten in einer idealerweise axial mittig liegenden Position auf, die einen weniger geneigten, idealerweise parallel zur Achse verlaufenden Abschnitt kennzeichnet, der idealerweise ein Sechseck bildet. Dadurch kann in Motoren mit länglichen Wicklungen der Vorteil einer höheren Leistungsdichte erzielt werden. Die mittigen Abschnitte können gerade oder auch leicht geschrägt sein. Eine leichte Schrägung wirkt sich gegenüber der ganz geraden Ausführung auf die Stabilität der Wicklung vorteilhaft aus, da so die Spulen auch in diesem Teil verschränkt sind.

In einer weiteren bevorzugten Ausführungsform werden die Einzelspulen in der abgerollten Form um eine Achse gewickelt, die in der aufgerollten Wicklung in tangentialer Richtung verläuft, so dass die Drähte in der neutralen Zone im Wesentlichen radial verlaufen und dadurch den Versatz erzeugen.

Die spezifische Viereck- oder Sechseckform wird durch einen anschließenden Längszug erreicht.

Die Wicklung ist in Einzelspulen gefertigt, wodurch die vorteilhafte Ausführungsform entsteht, eine präzisere Drahtlage und Formgebung zu erreichen. Diese Ausführungsform wirkt sich deshalb in gleicher Weise wie die vorher beschriebene Ausführungsform positiv auf die Symmetrie, die Raumausnutzung und die Assemblierbarkeit aus. Die Wicklung wird vorzugsweise mit Einzeldrähten oder zu Litzen verdrillten Drähten ausgeführt, kann aber auch mit parallel geführten Einzeldrähten hergestellt werden.

Alternativ zum Längsziehen kann eine Einzelspule in einer weiteren Ausführungsform so ausgeformt werden, dass sie zusätzlich zum radial verlaufenden Versatz an den beiden Enden der Wicklung jeweils zweimal einen weiteren Versatz an anderen Umkehrpunkten aufweist. Unter Umkehrpunkte sind Richtungswechselbereiche der Drähte zu verstehen.

Wenn die Einzelspule einen Anfangsbereich und einen Endbereich des die Einzelspule bildenden ein- oder mehrlagigen Drahtes aufweist, wobei die Anfangs- und Endbereiche im Bereich einer der Ecken der Einzelspule nach außen geführt sind, so ist eine Stromversorgung der Wicklung im fertigen Zustand besonders einfach mit herkömmlichen Mitteln möglich.

Um eine günstige leitende Verbindung zwischen den einzelnen Spulen zu erreichen, ist es in einer Variante insbesondere für Gleichstrommotoren von Vorteil, wenn jeweils ein Anfangsbereich einer ersten Einzelspule mit einem Endbereich einer zweiten Einzelspule zu einem Anschluss des Rotors verbunden ist. Eine entsprechende Ausführung kann auch für elektronisch kommutierte Motoren verwendet werden.

Die Erfindung betrifft auch Verfahren zum Herstellen eines Elektromotors mit einer Wicklung gemäß einem der Vorrichtungsansprüche. Auch hier ist es Aufgabe der Erfindung, einen höheren Grad an Automatisierung bei der Fertigung zu erreichen und eine höhere Qualität der Wicklung zu ermöglichen.

Eine besonders gute Kontaktierung bei nur geringem Aufwand lässt sich dann erreichen, wenn jeweils ein Anfangsbereich der Drahtlage einer ersten Einzelspule mit einem Endbereich einer benachbarten Einzelspule verdrillt wird, wobei der Anfangsbereich des Drahtes einer ersten Einzelspule auf der Außenseite einer zweiten Einzelspule bis zu dem Endbereich des Drahtes der zweiten Einzelspule entlanggeführt wird.

Vorteilhaft ist es auch, wenn die Drähte jeweils am unteren und am oberen Ende die Ebene wechseln, indem sie senkrecht zur Abbildungsebene verlaufen. Ein schneller unkomplizierter Wechsel der Drähte von einer Ebene auf die andere wird dadurch ermöglicht.

Wenn die Schenkel, die in der aufgerollten Spule außen liegen, stärker geneigt sind, als die Schenkel, die in der aufgerollten Spule innen liegen, so lässt sich eine weitere vorteilhafte Ausführungsform realisieren.

Im Folgenden werden Ausführungsbeispiele der vorliegenden Erfindung anhand einer Zeichnung näher erläutert. Es zeigen:
- Fig. 1: eine Seitenansicht auf eine erfindungsgemäße Wicklung mit Einzelspulen in konzentrischer Form;
- Fig. 2: eine schematische Detailansicht auf eine Ausführungsform der Einzelspule in konzentrischer Form, jedoch im abgewickelten flachen Zustand;
- Fig. 3: eine schematische Detailansicht auf eine Ausführungsform einer Einzelspule in verteilter Form im abgewickelten flachen Zustand;
- Fig. 4: eine schematische Detailansicht auf eine weitere Ausführungsform der Einzelspule in verteilter Form im abgewickelten flachen Zustand;
- Fig. 5: zwei schematische Darstellungen zweier weiterer Ausführungsformen der Einzelspule im abgewickelten flachen Zustand einmal mit weniger schrägen und einmal mit geraden Abschnitten;
- Fig. 6: eine schematische Darstellung der dachziegelartigen Schichtung mehrerer Einzelspulen;
- Fig. 7: eine schematische Teildetailansicht zweier dachziegelartig übereinander geschichteter Einzelspulen mit Anfangs- und Endabschnitten des Drahtes, wobei jeweils ein Endbereich einer Einzelspule mit einem Anfangsbereich einer anderen Einzelspule verdrillt ist und
- Fig. 8a und 8b: Darstellungen des Versatzes in axialer Ansicht in zwei unterschiedlichen Ausführungsbeispielen

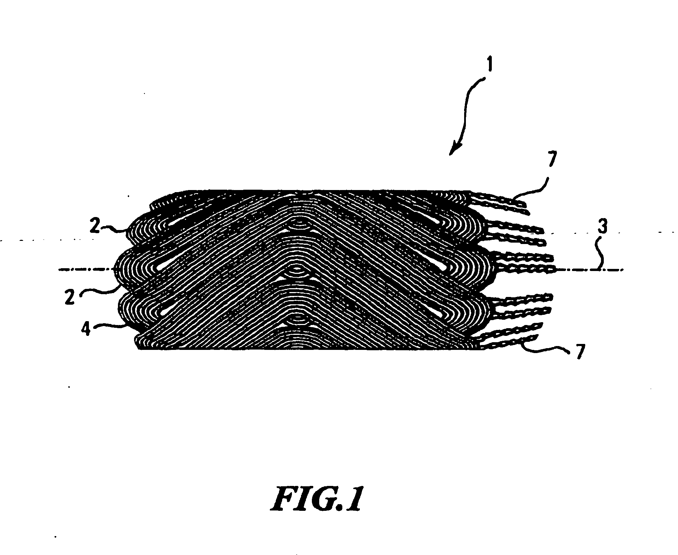

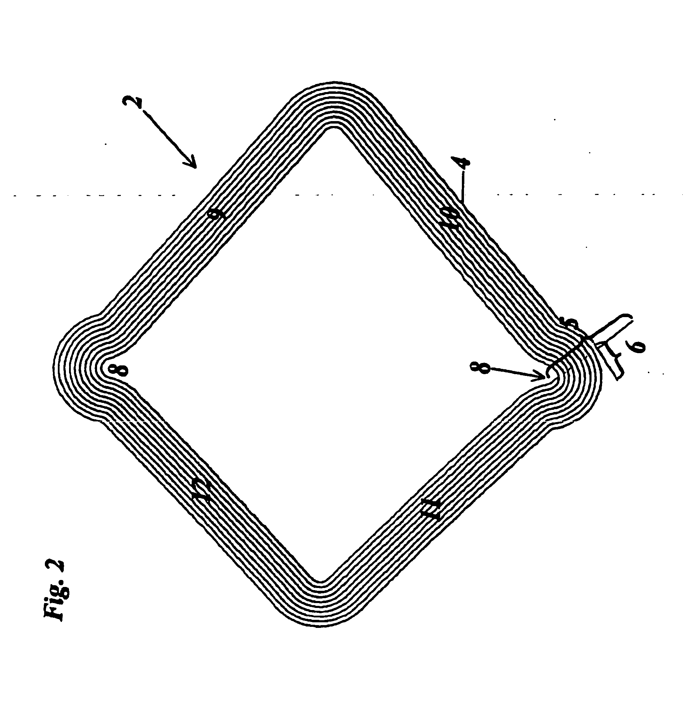

Fig. 1 zeigt eine Seitenansicht der kompletten Wicklung 1 des erfindungsgemäßen Elektromotors. Die Wicklung 1 weist einen hohlzylinderförmigen Körper auf. Der holzylinderförmige Körper der Wicklung setzt sich dabei aus einer Vielzahl an Einzelspulen 2 zusammen. Die Einzelspulen 2 sind dabei dachziegelartig übereinandergeschachtelt. In Fig. 1 ist jeweils eine Hälfte einer Einzelspule 2 zu sehen, während die andere Hälfte der jeweiligen Einzelspule 2 durch eine benachbarte Einzelspule 2 bedeckt ist. Die eine Hälfte der Einzelspule 2 ist somit auf der Außenseite der Wicklung 1 befindlich und die andere Hälfte auf der Innenseite der Wicklung 1. Die Wicklung 1 hat eine mittige Symmetrieachse 3, die auch gleichzeitig die Rotationsachse des Rotors ist und eine Längsachse desselben ist. Die Symmetrie der inneren Struktur der Wicklung ist idealerweise eine Drehsymmetrie. Die eine Hälfte einer Einzelspule 2 hat einen kleineren Abstand zu dieser Symmetrieachse als die andere Hälfte der Einzelspule 2. Es liegen somit für die Einzelspule zwei unterschiedliche Krümmungsradien vor. Jeweils drei radial übereinander befindliche Drähte 4 bilden in konzentrischen rautenartigen Aneinanderreihungen eine Einzelspule 2. Die drei Drähte bilden einen Anfangsbereich 5 und einen Endbereich 6. Die einzelnen Drähte 4 eines Endbereichs 6 einer ersten Einzelspule 2 werden mit den Drähten 4 eines Anfangsbereiches 5 einer zweiten Einzelspule 2 miteinander verdrillt und bilden einen Anschluss 7 der Wicklung. Die Anschlüsse 7 sind im Gegensatz zu den Anfangsbereichen 5 und 6 des Drahtes 4 in Fig. 1 gut erkennbar. Die Anfangsbereiche 5 und Endbereiche 6 der Drähte 4 sind in Fig. 2 besser erkennbar.

Es ist auch gut erkennbar, dass die Einzelspulen 2 einander dachziegelartig überlappen und jeweils die eine Hälfte der Schenkel in einem inneren Zylinder 16 befindlich ist und die andere Hälfte der Schenkel in einem äußeren Zylinder 15 unter Herausbildung eines Versatzes liegen. Jeweils die Hälfte der Schenkel liegen in einer ersten Ebene 18 und die andere Hälfte der Schenkel, unter Herausbildung eines Versatzes 17, liegen in einer dazu parallelen Ebene 19. Die Form der Einzelspulen 2 ist dabei so ausgestaltet, dass die Einzelspulen 2 auf mindestens einem Abschnitt mindestens eines Schenkels 9, 10, 11, 12 so ausgeformt sind, dass sich die Außenkante der einen Wicklung 1 jeweils mit der Innenkante der benachbarten Wicklung 1 so berührt, dass die tangentiale Bewegungsfreiheit der Einzelspule 2 durch einen Formschluss eingeschränkt ist. Die Schrägung der Schenkel der äußeren Lage 9 und 10 ist größer als die der inneren Lage 11 und 12.

In Fig. 2 ist eine Einzelspule 2 dargestellt. Auf der den Anfangs- und Endbereichen 5 und 6 gegenüberliegenden Seite ist in dieser Ausgestaltungsform der Einzelspule 2 ein Vorlauf 8 vorgesehen. Dieser Vorlauf 8 ist als haarnadelförmige Ausbuchtung ausgebildet.

Es ist erfindungsgemäß, den Vorlauf an jeder Stelle einzufügen, an der ein radialer Versatz auftritt.

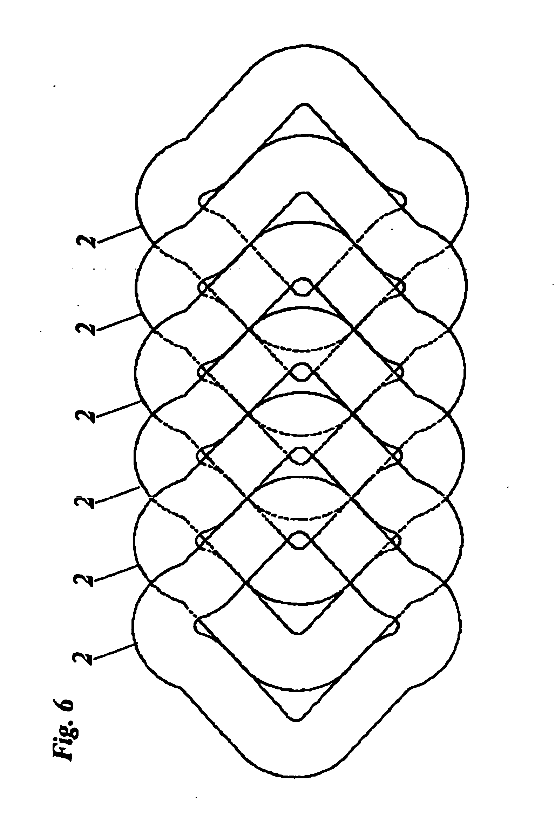

Wie in Fig. 2 dargestellt, weist auch die gegenüberliegende Ecke der Einzelspule 2, also der Bereich, aus dem der Anfangsbereich 5 und der Endbereich 6 hervorkommt, einen Vorlauf 8 auf. Der Vorlauf ist notwendig, um einen Versatz, wie er in Fig. 6 noch ausführlich beschrieben wird, zu erzeugen. Die beiden rechten Schenkel 9, 10 der Einzelspule 2 aus Fig. 2 sind dann nicht mehr in der selben Ebene wie die beiden linken Schenkel 11,12 der Einzelspule 2. Die rechten beiden Schenkel befinden sich in einer Ebene höher als die linken beiden Schenkel. Es ist aber auch genau andersherum möglich.

Die Schenkel 9 und 10, die in der aufgerollten Spule außen liegen, sind stärker geneigt als die Schenkel 11 und 12, die in der aufgerollten Spule innen liegen und bilden so die Form eines Drachenvierecks. Dadurch können die Einzelsegmente 2 sowohl auf der äußeren Ebene als auch auf der inneren Ebene formschlüssig anliegen und der Raum optimal gefüllt werden.

Wie bei allen Ausführungsformen kann auch hier auf die Formschlüssigkeit und die maximale Füllung der äußeren Ebene verzichtet werden. In Fig. 2 ist der Draht 4 schematisch durch eine spiralförmig gewundene Linie dargestellt, ungeachtet dessen, dass mehrere Windungen senkrecht zur Ansichtsebene hintereinander angeordnet sein können, bevor eine neue Lage aufgebaut wird. Es ist auch möglich, Einzelspulen aus zwei oder mehr Drähten zu fertigen, die in der fertigen Wicklung parallel geschaltet werden.

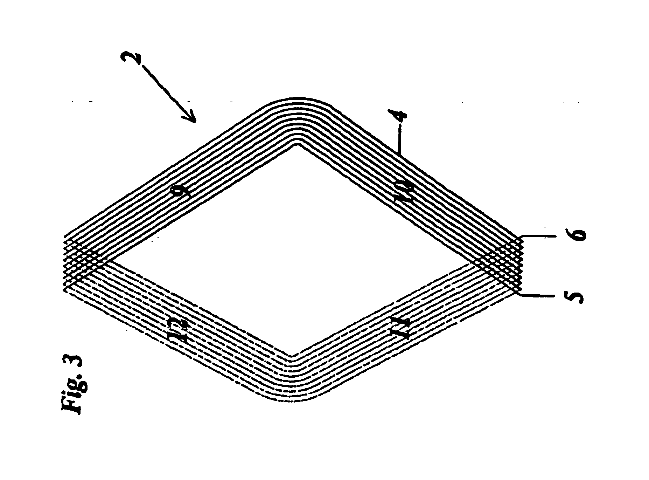

In der Figur 3 ist eine Detailansicht auf eine Ausführungsform einer Einzelspule 2 in verteilter Form im abgewickelten flachen Zustand dargestellt. Der Draht 4 ist wieder schematisch durch eine Linie dargestellt. Die Drähte wechseln jeweils am unteren und am oberen Ende die Ebene, indem sie senkrecht zur Abbildungsebene verlaufen. Die Drähte, welche in der fertigen Wicklung in der äußeren Ebene liegen würden, sind fetter dargestellt. In der dargestellten Ausführungsform sind dies die rechten Schenkel 9, 10. Die spiegelverkehrte Anordnung ist aber gleichwertig. In der Figur 3 ist besonders deutlich erkennbar, dass die Schenkel 9, 10, die in der aufgerollten Spule außen liegen, stärker geneigt werden, als die Schenkel 11, 12, die in der aufgerollten Spule innen liegen. Dadurch können die Einzelsegmente 2 sowohl auf der äußeren Ebene als auch auf der inneren Ebene formschlüssig anliegen und der Raum optimal gefüllt werden. Wie bei allen Ausführungsformen kann auch hier auf die Formschlüssigkeit und die maximale Füllung der äußeren Ebene verzichtet werden. Der Wickelsinn der Spule ist nicht durch ihre Endform vorgegeben; es kann der Spulenanfang 5 oder das Spulenende 6 oben liegend ausgeführt sein.

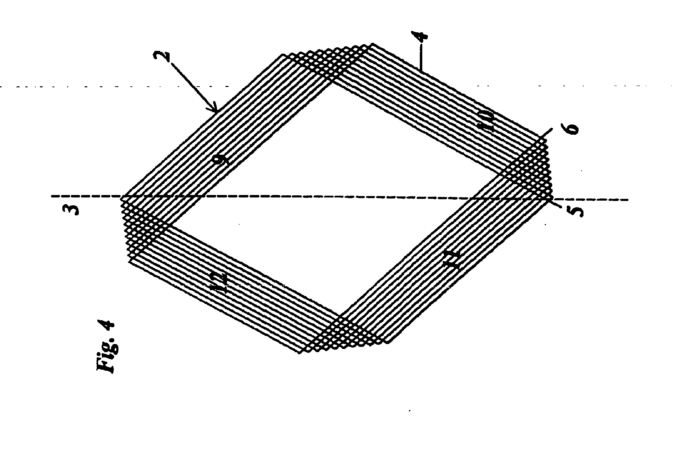

Fig. 4 zeigt eine Detailansicht auf eine Einzelspule einer weiteren Ausführungsform im abgewickelten flachen Zustand. Es handelt sich um eine verteilte Form, bei der nicht nur an den axialen Enden, sondern bei jedem Übergang von einem Schenkel zum nächsten die Ebene wechselt. In Figur 4 sind die Schenkel 9 und 11 für die äußere Ebene, die Schenkel 10 und 12 für die innere Spulenebene vorgesehen. Durch die Schräglage gegenüber der Symmetrieachse 3 kann auch in dieser Ausführungsform eine formschlüssige und dichte Füllung von äußerer und innerer Lage erreicht werden. Wie bei anderen Ausführungsformen kann auch hier auf die Formschlüssigkeit und die maximale Füllung der äußeren Ebene verzichtet werden.

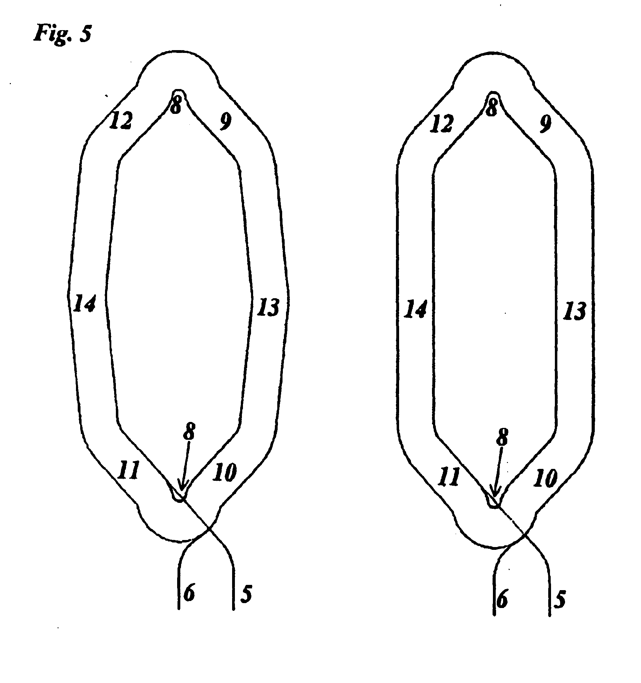

Fig. 5 zeigt die Kontur der Einzelspulen zweier weiterer Ausführungsformen im abgewickelten flachen Zustand. Dargestellt sind Anfangsbereich 5 und Endbereich 6, während auf die Darstellung der Drähte verzichtet wurde. Zwischen Schenkel 9 und 10 befindet sich ein weniger schräg ausgestalteter Abschnitt 13, und ebenso zwischen Schenkel 11 und 12 der Abschnitt 14. Die Abschnitte 13 und 14 können, wie in der linken Abbildung leicht schräg oder wie in der rechten Abbildung gerade ausgestaltet sein. Eine leichte Schrägung wirkt sich gegenüber der ganz geraden Ausführung auf die Stabilität der Wicklung vorteilhaft aus, da so die Spulen auch in diesem Teil verschränkt sind. Die Kontur zeigt die konzentrische Ausführungsform mit dem typischen Vorlauf 8. Die Formgebung mit weniger geneigten Zwischenabschnitten 13 und 14 ist aber gleichermaßen auch auf eine verteilte Wicklungsform anwendbar, wie sie ohne diese Zwischenabschnitte in Figur 3 dargestellt ist.

Fig. 6 zeigt eine schematische Darstellung einer dachziegelartigen Schichtung von sechs konzentrischen Einzelspulen 2. Die dargestellte Zeichnung entspricht einer Anordnung für Linearmotoren. Sie kann auch als zylindrische Wicklung im abgewickelten flachen Zustand angesehen werden. Die in dieser Ansicht jeweils verdeckten Partien sind gestrichelt gezeichnet. Die Drähte und die Wicklungsenden sind in dieser Figur nicht dargestellt.

Die Einzelspulen 2 sind hier jeweils formschlüssig nebeneinander gesetzt. Jedes Wicklungspaket muss auf der einen Seite (hier rechts) über dem nächsten Wicklungspaket stehen, aber auf der Gegenseite (hier links) muss es unter dem nächsten Wicklungspaket stehen.

Zusätzlich müssen diese Wicklungspakete möglichst dicht gepackt werden. Dies erfordert einen vertikalen Versatz in jeder Teilwicklung, und dies zweimal, oben und unten, damit die eine Hälfte hervorsteht und die andere Hälfte zurückversetzt bleibt. Der vertikale Versatz benötigt eine gewisse Drahtlänge, die nicht auf Kosten der Wicklungsregelmäßigkeit wirken sollte.

Die Drahtführung in dem für den Motor "aktiven" Teil, d.h. von elektrischem Strom durchflossen, der Wicklung bleibt regelmäßig und parallel, so dass benachbarte Wicklungspakete dicht aneinander gepackt werden können. Der Vorlauf in der neutralen Zone stellt die für den vertikalen Versatz notwendige Drahtlänge zur Verfügung. Durch diesen Vorlauf in der neutralen Zone können die zwei Teilwicklungshälften vertikal versetzt werden, ohne beschädigt zu werden. Durch das Abknicken in den vertikalen Versatz wird in diesem Fall die jeweilige Teilwicklungshälfte um ein reproduzierbares Maß zusammengezogen. Dieses Maß ist bei der Bewicklung zu berücksichtigen, so dass die resultierende Teilwicklung nach dem Abknicken in den vertikalen Versatz die optimale Geometrie beibehält.

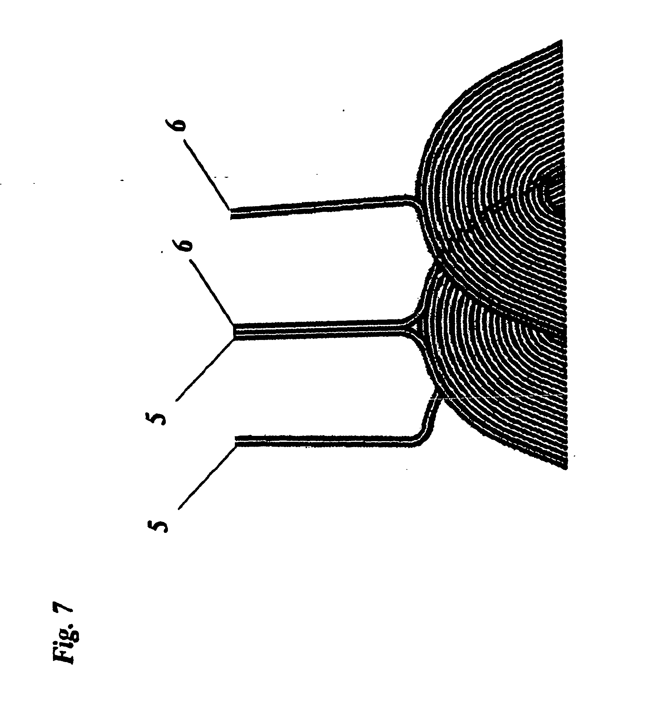

Fig. 7 zeigt eine schematische Ansicht zweier dachziegelartig übereinander geschichteter konzentrischer Einzelspulen jeweils mit den Anfangsbereichen 5 und Endbereichen 6 des Drahtes. Hieraus wird ersichtlich, dass in dieser Ausformung der Endbereich einer Einzelspule direkt neben dem Anfangsbereich einer benachbarten Einzelspule zu liegen kommt. In dieser Lage können die beiden Bereiche miteinander verdrillt werden. Dabei bilden sich die Anschlüsse 7 der Wicklung 1 aus.

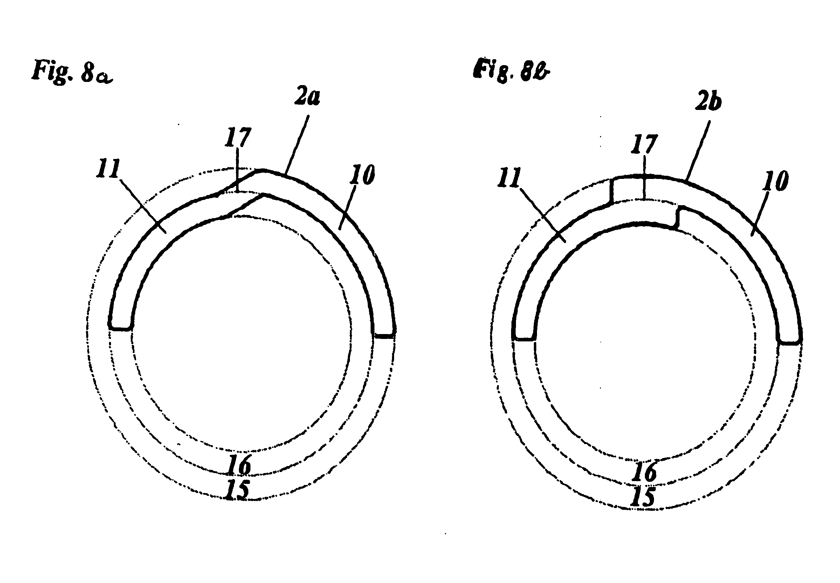

Fign. 8a und 8b zeigen schematisch die axiale Ansicht auf die Kontur einer Einzelspule in konzentrischer Form 2a und einer Einzelspule in verteilter Form 2b in einer zylindrischen Wicklung. Drähte 4 und Anschlüsse 7 sind nicht dargestellt. Man sieht hier gut, dass jeweils ein Schenkel 10 in einem äußeren Zylinder 15 und ein Schenkel 11 in einem inneren Zylinder 16 verläuft, also zwischen diesen Schenkeln ein radialer Versatz 17 vorliegt. Die jeweils anderen Schenkel sind in dieser Perspektive nicht sichtbar, weil sie axial hinter den vorderen Schenkeln liegen.

Als Folge der Erfindung lassen sich Motoren mit Wicklungen hoher Packungsdichte herstellen. Es lässt sich dabei ein guter Automatisierungsgrad realisieren. Der Ausschuss wird verringert und die Unwucht wird vermindert. Durch all das lässt sich ein technischer Vorteil bei gleichzeitig geringeren Kosten erreichen.

## Patentansprüche

1. Elektromotor mit einer eisenlosen Wicklung (1), die aus einer Vielzahl von Einzelspulen (2) aus Draht (4) zusammengesetzt ist, wobei die Einzelspulen (2) einander dachziegelartig überlappen, wobei die Einzelspulen (2) so vorgeformt sind, dass sie jeweils mindestens im Bereich zweier gegenüberliegender Ecken einen Versatz (17) bilden, so dass jeweils die Hälfte der Schenkel in einer ersten Ebene (16) und die Hälfte der Schenkel in einer zweiten Ebene (15) liegen, **dadurch gekennzeichnet, dass** die Einzelspulen im Bereich des Versatzes (17) zusätzliches Drahtmaterial (4) als Vorlauf (8) aufweisen, wobei der Vorlauf (8) die notwendige Drahtlänge für den Versatz (17) in Form einer Ausbuchtung zur Verfügung stellt.

2. Elektromotor nach Anspruch 1, **dadurch gekennzeichnet, dass** die Einzelspulen (2) eine Wicklung dachziegelartig überlappend formen, um die Rotationsachse des Motors gebogen sind und zusammen die Form eines Hohlzylinders bilden.

3. Elektromotor nach Anspruch 1 oder 2, **dadurch gekennzeichnet, dass** die Einzelspule (2) spiralig in abgerollter Form um eine Achse angeordnet ist, die in der aufgerollten Wicklung (1) in radialer Richtung verläuft, so dass die Drähte (4) in der neutralen Zone im Wesentlichen tangential verlaufen.

4. Elektromotor nach zumindest einem der vorhergehenden Ansprüche, **dadurch gekennzeichnet, dass** der Vorlauf (8) an der Innenkontur der Einzelspule eine haarnadelartige oder schlaufenförmige Ausbuchtung bildet.

5. Elektromotor nach zumindest einem der vorhergehenden Ansprüche, **dadurch gekennzeichnet, dass** sowohl die Innenseite als auch die Außenseite der Einzelspule (2) eine vordefinierte Form aufweisen.

6. Elektromotor nach zumindest einem der vorhergehenden Ansprüche, **dadurch gekennzeichnet, dass** die Einzelspulen (2) in der abgerollten Form um eine Achse gewickelt sind, die in der aufgerollten Wicklung (1) in tangentialer Richtung verläuft, so dass die Drähte (4) in der neutralen Zone im Wesentlichen radial verlaufen und dadurch den Versatz (17) erzeugen.

7. Elektromotor nach zumindest einem der vorhergehenden Ansprüche, **dadurch gekennzeichnet, dass** die Einzelspule (2) zusätzlich zum radial verlaufenden Versatz (17) an den beiden Enden der Wicklung (1) jeweils zweimal ein weiterer Versatz (17) an anderen Umkehrpunkten aufweist.

8. Elektromotor nach zumindest einem der vorhergehenden Ansprüche, **dadurch gekennzeichnet, dass** die Einzelspule (2) asymmetrisch ausgestaltet ist und dass zumindest die Einzelspule (2) im abgewickelten flachen Zustand im Wesentlichen die Form eines Vierecks mit ungleichlangen Schenkeln (9, 10, 11, 12) und/oder eines Drachenvierecks aufweist.

9. Elektromotor nach zumindest einem der vorhergehenden Ansprüche, **dadurch gekennzeichnet, dass** die Einzelspulen (2) Einzelwicklungen aufweisen, die zwischen idealerweise aneinanderliegenden diagonalen Abschnitten in der axial, idealerweise mittig liegenden Position, einen weniger geneigten, idealerweise parallel zur Achse verlaufenden Abschnitt aufweisen, der idealerweise ein Sechseck bildet.

10. Elektromotor nach zumindest einem der vorhergehenden Ansprüche, **dadurch gekennzeichnet, dass** eine Vielzahl von isolierten Einzeldrähten (4) vor dem Wickelvorgang zu einer Litze verdrillt ist.

11. Elektromotor nach zumindest einem der vorhergehenden Ansprüche, **dadurch gekennzeichnet, dass** die Einzelspule (2) einen Anfangsbereich (5) und einen Endbereich (6) des die Einzelspule (2) bildenden ein- oder mehrlagigen Drahtes (4) aufweist, wobei die Anfangs- und Endbereiche (5, 6) im Bereich einer der Ecken der Einzelspule (2) nach außen geführt sind.

12. Elektromotor nach Anspruch 11, **dadurch gekennzeichnet, dass** ein Anfangsbereich (5) einer ersten Einzelspule (2) mit einem Endbereich (6) einer zweiten Einzelspule (2) zu einem Anschluss (7) verbunden ist.

13. Elektromotor nach zumindest einem der vorhergehenden Ansprüche, **dadurch gekennzeichnet, dass** die Wicklung (1) in Einzelspulen (2) gefertigt ist.

14. Verfahren zum Herstellen eines Elektromotors mit einer eisenlosen Wicklung (1), die aus einer Vielzahl von Einzelspulen (2) aus Draht (4) zusammengesetzt wird, wobei die Einzelspulen (2) einander dachziegelartig überlappend angeordnet werden, wobei die Einzelspulen (2) so vorgeformt werden, dass sie jeweils mindestens im Bereich zweier gegenüberliegender Ecken einen Versatz (17) bilden, so dass jeweils die Hälfte der Schenkel in einer ersten Ebene (16) und die Hälfte der Schenkel in einer zweiten Ebene (15) liegen, **dadurch gekennzeichnet, dass** der Draht der Einzelspulen im Bereich des Versatzes (17) so aufgewickelt wird, dass die Einzelspulen dort zusätzliches Drahtmaterial (4) als Vorlauf (8) aufweisen, wobei der Vorlauf (8) die notwendige Drahtlänge für den Versatz (17) in Form einer Ausbuchtung zur Verfügung stellt.

15. Verfahren nach Anspruch 14, **dadurch gekennzeichnet, dass** jeweils ein Anfangsbereich (5) der Drahtlage einer ersten Einzelspule (2) mit einem Endbereich (6) einer benachbarten Einzelspule (2) verdrillt wird, wobei der Anfangsbereich (5) des Drahtes (4) einer ersten Einzelspule (2) auf der Außenseite einer zweiten Einzelspule (2) bis zu dem Endbereich (6) des Drahtes (4) der zweiten Einzelspule (2) entlanggeführt wird.

16. Verfahren nach Anspruch 14 oder 15, **dadurch gekennzeichnet, dass** die Drähte (4) jeweils am unteren und am oberen Ende die Ebene (18, 19) wechseln, indem sie senkrecht zur Abbildungsebene verlaufen.

17. Verfahren nach zumindest einem der Ansprüche 14 bis 16, **dadurch gekennzeichnet, dass** die Schenkel (9, 10, 11, 12), die in der aufgerollten Spule (2) außen liegen, stärker geneigt werden, als die Schenkel (9, 10, 11, 12), die in der aufgerollten Spule (2) innen liegen.

## Claims

1. Electric motor having an air-cored winding (1) which is composed of a plurality of single coils (2) made of wire (4), wherein the single coils (2) overlap each other in an imbricated manner, the single coils (2) are preformed to form an offset (17) at least in the region of two opposite corners, so that half of the legs are located in a first plane (16) and half of the legs are located in a second plane (15) **characterized in that** the single coils are provided with additional wire material (4) as feed (8) in the region of the offset (17), whereby the feed (8) provides the necessary wire length in form of a bulge.

2. Electric motor according to claim 1, **characterized in that** the single coils (2) form a winding in an imbricated overlapping manner, are bent about the axis of rotation of the motor and together form the shape of a hollow cylinder.

3. Electric motor according to claim 1 or 2, **characterized in that** the single coil (2) is, in an unwound form, arranged spirally about an axis which, in the wound up winding (1), extends in a radial direction, so that the wires (4) in the neutral zone extend substantially tangentially.

4. Electric motor according to at least one of the preceding claims, **characterized in that** the feed (8) forms a hairpin-type or loop-shaped bulge at the inner contour of the single coil.

5. Electric motor according to at least one of the preceding claims, **characterized in that** both the inside and the outside of the single coil (2) have a predefined shape.

6. Electric motor according to at least one of the preceding claims, **characterized in that** the single coils (2) are wound, in the unwound form, about an axis which, in the wound up winding (1), extends in a tangential direction so that the wires (4) in the neutral zone extend substantially radially thereby producing the offset (17).

7. Electric motor according to at least one of the preceding claims, **characterized in that**, in addition to the radially extending offset (17) on both ends of the winding (1), the single coil (2) comprises two times a further offset (17) at other inversion points.

8. Electric motor according to at least one of the preceding claims, **characterized in that** the single coil (2) is formed asymmetrically and that at least the single coil (2) in the unwound flat state has a substantially quadrangular shape with unequally long legs (9, 10, 11, 12) and/or a kite-quadrangular shape.

9. Electric motor according to at least one of the preceding claims, **characterized in that** the single coils (2) are provided with individual windings having between ideally adjacent diagonal sections in the axial, ideally central position a less inclined section extending ideally parallel to the axis, said section ideally forming a hexagon.

10. Electric motor according to at least one of the preceding claims, **characterized in that** a plurality of insulated single wires (4) are twisted to form a strand prior to the winding process.

11. Electric motor according to at least one of the preceding claims, **characterized in that** the single coil (2) comprises a front-end portion (5) and an end portion (6) of the single-layered or multilayered wire (4) forming the single coil (2), with the front-end and end portions (5, 6) routed outwardly in the region of one of the corners of the single coil (2).

12. Electric motor according to at least one of the preceding claims, **characterized in that** one front-end portion (5) of a first single coil (2) is connected with an end portion (6) of a second single coil (2) to form a connecting lead (7).

13. Electric motor according to at least one of the preceding claims, **characterized in that** the winding (1) is fabricated in single coils (2).

14. Method for producing an electric motor having an air-cored winding (1) which is composed of a plurality of single coils (2) made of wire (4), wherein the single coils (2) overlap each other in an imbricated manner, the single coils (2) are preformed to form an offset (17) at least in the region of two opposite corners, so that half of the legs are located in a first plane (16) and half of the legs are located in a second plane (15) **characterized in that** the single coils are provided with additional wire material (4) as feed (8) in the region of the offset (17), whereby the feed (8) provides the necessary wire length in form of a bulge.

15. Method according to claim 14, **characterized in that** a front-end portion (5) of the wire layer of a first single coil (2) is twisted with an end portion (6) of an adjacent single coil (2), wherein the front-end portion (5) of the wire (4) of a first single coil (2) is passed along on the outer side of a second single coil (2) up to the end portion (6) of the wire (4) of the second single coil (2).

16. Method according to claim 14 or 15, **characterized in that** the wires (4) each change planes at the lower and upper end (18, 19) by extending perpendicularly to the plane of projection.

17. Method according to at least one of claims 14 to 16, **characterized in that** the legs (9, 10, 11, 12) located outside in the wound up coil (2) are inclined more strongly than the legs (9, 10, 11, 12) located inside in the wound up coil (2).

## Revendications

1. Moteur électrique avec un enroulement à noyau d'air (1) qui se compose d'une multiplicité de bobines individuelles (2) en fil (4), les bobines individuelles (2) se recouvrant de manière tuilée et étant préformées de manière à former au moins dans la zone de deux coins opposés un déport (17), de sorte que la moitié des branches se trouvent dans un premier plan (16) et la moitié des branches se trouvent dans un second plan (15), **caractérisé en ce que** les bobines individuelles présentent dans la zone du déport (17) un matériau de fil (4) supplémentaire sous la forme d'une avancée (8), l'avancée (8) fournissant la longueur de fil nécessaire pour le déport (17) sous la forme d'un partie bombée.

2. Moteur électrique selon la revendication 1, **caractérisé en ce que** les bobines individuelles (2) forment un enroulement en se recouvrant de manière tuilée, sont courbées autour de l'axe de rotation et définissent ensemble la forme d'un cylindre creux.

3. Moteur électrique selon la revendication 1 ou 2, **caractérisé en ce que** la bobine individuelle (2) est disposée en spirale, sous forme déroulée, autour d'un axe qui s'étend dans le sens radial dans l'enroulement (1) déroulé, de sorte que les fils (4) s'étendent globalement tangentiellement dans la zone neutre.

4. Moteur électrique selon l'une au moins des revendications précédentes, **caractérisé en ce que** l'avancée (8) forme sur le contour intérieur de la bobine individuelle une partie bombée en forme d'épingle à cheveux ou en forme de boucle.

5. Moteur électrique selon l'une au moins des revendications précédentes, **caractérisé en ce que** le côté intérieur et le côté extérieur de la bobine individuelle (2) présentent tous les deux une forme prédéfinie.

6. Moteur électrique selon l'une au moins des revendications précédentes, **caractérisé en ce que** les bobines individuelles (2) dans la forme déroulée sont enroulées autour d'un axe qui s'étend dans le sens tangentiel dans l'enroulement (1) enroulé, de sorte que les fils (4) s'étendent globalement radialement dans la zone neutre et produisent ainsi le déport (17).

7. Moteur électrique selon l'une au moins des revendications précédentes, **caractérisé en ce que** la bobine individuelle (2) présente, en plus du déport (17) radial aux deux extrémités de l'enroulement (1), deux fois un autre déport (17) au niveau d'autres points d'inversion.

8. Moteur électrique selon l'une au moins des revendications précédentes, **caractérisé en ce que** la bobine individuelle (2) a une forme asymétrique et **en ce qu'**au moins la bobine individuelle (2) à l'état plat déroulé présente globalement la forme d'un quadrilatère avec des côté (9, 10, 11, 12) de longueurs différentes, et/ou d'un cerf-volant.

9. Moteur électrique selon l'une au moins des revendications précédentes, **caractérisé en ce que** les bobines individuelles (2) présentent des enroulements individuels qui présentent entre des segments en diagonale idéalement placés l'un contre l'autre, dans la position axiale idéalement centrée, un segment moins incliné, idéalement parallèle à l'axe, qui forme idéalement un hexagone.

10. Moteur électrique selon l'une au moins des revendications précédentes, **caractérisé en ce qu'**une multiplicité de fils individuels isolés (4) sont tordus avant l'opération d'enroulement pour former un toron.

11. Moteur électrique selon l'une au moins des revendications précédentes, **caractérisé en ce que** la bobine individuelle (2) présente une zone initiale (5) et une zone terminale (6) du fil monocouche ou multicouche (4) qui forme ladite bobine individuelle (2), les zones initiale et terminale (5, 6) menant vers l'extérieur, dans la zone de l'un des angles de la bobine individuelle (2).

12. Moteur électrique selon la revendication 11, **caractérisé en ce qu'**une zone initiale (5) d'une première bobine individuelle (2) est reliée à une zone terminale (6) d'une seconde bobine individuelle (2) pour former un raccordement (7).

13. Moteur électrique selon l'une au moins des revendications précédentes, **caractérisé en ce que** l'enroulement (1) est réalisé en bobines individuelles (2).

14. Procédé pour fabriquer un moteur électrique avec un enroulement à noyau d'air (1) qui se compose d'une multiplicité de bobines individuelles (2) en fil (4), les bobines individuelles (2) étant disposées pour se recouvrir de manière tuilée et les bobines individuelles (2) étant préformées de manière à former au moins dans la zone de deux coins opposés un déport (17), de sorte que la moitié des branches se trouvent dans un premier plan (16) et la moitié des branches se trouvent dans un second plan (15), **caractérisé en ce que** le fil des bobines individuelles est enroulé dans la zone du déport (17) de telle sorte que les bobines individuelles présentent à cet endroit un matériau de fil (4) supplémentaire sous la forme d'une avancée (8), l'avancée (8) fournissant la longueur de fil nécessaire pour le déport (17) sous la forme d'un partie bombée.

15. Procédé selon la revendication 14, **caractérisé en ce qu'**une zone initiale (5) de la couche de fil d'une première bobine individuelle (2) est tordue avec une zone terminale (6) d'une bobine individuelle (2) voisine, la zone initiale (5) du fil (4) d'une première bobine individuelle (2) longeant le côté extérieur d'une seconde bobine individuelle (2) jusqu'à la zone terminale (6) du fil (4) de la seconde bobine individuelle (2).

16. Procédé selon la revendication 14 ou 15, **caractérisé en ce que** les fils (4) changent de plan (18, 19) à l'extrémité inférieure et à l'extrémité supérieure en s'étendent perpendiculairement au plan de représentation.

17. Procédé selon l'une au moins des revendications 14 à 16, **caractérisé en ce que** les branches (9, 10, 11, 12) qui sont situées à l'extérieur dans la bobine (2) déroulée,
sont plus inclinées que les branches (9, 10, 11, 12) qui sont situées à l'intérieur dans la bobine (2) enroulée.
